(19) **Europäisches Patentamt / European Patent Office / Office européen des brevets**

(11) **EP 4 238 688 A1**

(12) # EUROPEAN PATENT APPLICATION
published in accordance with Art. 153(4) EPC

(43) Date of publication:
06.09.2023 Bulletin 2023/36

(21) Application number: 22871449.9

(22) Date of filing: 31.05.2022

(51) International Patent Classification (IPC):
*B23K 26/21* (2014.01)        *B23K 26/70* (2014.01)
*B23K 26/064* (2014.01)

(52) Cooperative Patent Classification (CPC):
**B23K 26/064; B23K 26/067; B23K 26/16;
B23K 26/21; B23K 26/70;** Y02E 60/10

(86) International application number:
**PCT/CN2022/096150**

(87) International publication number:
**WO 2023/045388 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 24.09.2021  CN 202122326749 U

(71) Applicant: **Contemporary Amperex Technology
Co., Limited
Ningde, Fujian 352100 (CN)**

(72) Inventors:
• **QI, Congcheng
Ningde, Fujian 352100 (CN)**

• **LI, Yingjun
Ningde, Fujian 352100 (CN)**
• **LI, Pengfei
Ningde, Fujian 352100 (CN)**
• **ZHANG, Zhihong
Ningde, Fujian 352100 (CN)**
• **ZHENG, Shixiong
Ningde, Fujian 352100 (CN)**

(74) Representative: **Ziebig Hengelhaupt Intellectual
Property Attorneys
Patentanwaltsanwaltskanzlei PartGmbB
Leipziger Straße 49
10117 Berlin (DE)**

(54) **WELDING APPARATUS AND WELDING DEVICE**

(57)    This application relates to the field of welding technologies, and specifically, to a welding apparatus and a welding device. The welding apparatus includes: a body portion; a welding part, disposed on the body portion and configured to weld welding points on a to-be-welded object; and a distance measuring part, disposed on the body portion and located on a side of the welding part, and configured to measure a defocus amount from the welding points on the to-be-welded object to the welding part, where the welding part and the distance measuring part are aligned to different welding points at the same time, so that the welding part and the distance measuring part can simultaneously perform welding and distance measurement on different welding points, respectively. In the foregoing manner, the welding apparatus provided in embodiments of this application can improve welding efficiency and increase battery productivity.

EP 4 238 688 A1

FIG. 1

## Description

### CROSS-REFERENCE TO RELATED APPLICATIONS

This application claims priority to Chinese patent application No. 202122326749.3, filed on September 24, 2021 and entitled "WELDING APPARATUS AND WELDING DEVICE", which is incorporated herein by reference in its entirety.

### TECHNICAL FIELD

This application relates to the field of welding technologies, and specifically, to a welding apparatus and a welding device.

### BACKGROUND

Currently, with vigorous promotion of energy conservation and emission reduction, application of traction batteries is becoming more extensive with increasing demand. In the production process of a battery, poles need to be welded on a battery housing, so as to form a current loop by connecting the poles to an external apparatus. In order to ensure a defocus amount of the welding in the welding process of the poles, distance to the poles needs to be measured before welding.

Inventors of this application have found in research that, during an existing pole welding operation of batteries, distance measurement and welding are separately performed, leading to low welding efficiency and thus affecting battery productivity.

### SUMMARY

In view of the foregoing problem, this application provides a welding apparatus and a welding device, which can improve welding efficiency and increase battery productivity.

According to an aspect of some embodiments of this application, a welding apparatus is provided, including: a body portion; a welding part, disposed on the body portion and configured to weld welding points on a to-be-welded object; and a distance measuring part, disposed on the body portion and located on a side of the welding part, and configured to measure a defocus amount from the welding points on the to-be-welded object to the welding part, where the welding part and the distance measuring part are aligned to different welding points at the same time, so that the welding part and the distance measuring part simultaneously perform welding and distance measurement on different welding points, respectively.

The welding part and the distance measuring part are both disposed on the body portion of the welding apparatus, and the distance measuring part is disposed on a side of the welding part. The welding part and the distance measuring part are aligned to different welding points at the same time, so that the welding part and the distance measuring part simultaneously perform welding and distance measurement on different welding points, respectively. Specifically, on the to-be-welded object, a welding point that has been measured by the distance measuring part is welded by the welding part. While the welding part is performing welding, the distance measuring part measures distance to a next welding point, so that times of the distance measurement and welding coincide, thereby effectively improving the efficiency of the welding step in battery production and increasing battery productivity to meet market demand.

In an optional manner, the distance measuring part includes multiple distance meters, where the multiple distance meters are configured to simultaneously perform distance measurement on multiple welding points on the to-be-welded object; and the welding part is configured to weld the multiple welding points that have been measured by the multiple distance meters. The distance measuring part includes multiple distance meters, and the multiple distance meters are configured to simultaneously perform distance measurement on multiple welding points on the to-be-welded object, which increases the number of the welding points that can be simultaneously measured. The welding part is configured to weld the multiple welding points that have been measured by the multiple distance meters, so that the multiple welding points that have been measured are welded, thereby further improving welding efficiency and increasing productivity.

In an optional manner, the distance measuring part further includes a position adjustment component, where the multiple distance meters are all disposed on the position adjustment component. The distance measuring part further includes the position adjustment component, and the multiple distance meters are all disposed on the position adjustment component, so that the overall position of the distance meters on the body portion and the relative positions of the multiple distance meters can be adjusted. Therefore, based on different to-be-welded objects and different distances between welding points, the positions of the distance meters and the distance between the distance meters can be adjusted accordingly, so as to adapt to different to-be-welded objects, thereby improving compatibility of the welding apparatus to meet different application scenarios.

In an optional manner, the position adjustment component includes a first slide rail and a second slide rail that are disposed perpendicular to each other, where the first slide rail is fastened on the body portion, the second slide rail is slidably disposed on the first slide rail, and the distance meter is slidably disposed on the second slide rail. The position adjustment component includes the first slide rail and the second slide rail that are disposed perpendicular to each other. The first slide rail is fastened on the body portion, so that the position adjustment component and the distance meters are fastened on the body portion. The second slide rail is slidably disposed on the first slide rail, and the distance meters are slidably disposed on the second slide rail, so that relative positions of the distance meters can be adjusted, which enables the distance meters to perform corresponding position adjustment based on welding points on different to-be-welded objects, thereby improving the compatibility of the welding apparatus.

In an optional manner, a positioning part is disposed on the body portion. The positioning part is disposed on the body portion to position the welding points on the to-be-welded object, thereby improving welding accuracy and precision of the welding apparatus.

In an optional manner, a blowing part is disposed on the body portion. The blowing part is disposed on the body portion to blow away fumes produced during welding in a timely manner, so as to facilitate observation of welding conditions and help ensure the welding accuracy.

In an optional manner, the welding apparatus further includes an inspection part, where the inspection part is configured to inspect and calibrate the distance measuring part. The welding apparatus further includes the inspection part, and the inspection part inspects and calibrates the distance measuring part, so as to ensure distance measurement precision of the distance measuring part, thereby avoiding welding failure caused by errors in distance measurement, as well as the resulting welding perforation and other situations that will affect the product qualification rate.

In an optional manner, a step-like structure is provided on the inspection part. The step-like structure is provided on the inspection part, so that distance measurement precision, repetition precision, linearity, and directivity of the distance measuring part in positive and negative directions can be inspected and calibrated.

In an optional manner, positioning through holes are provided in corners of the inspection part. The positioning through holes are provided in the corners of the inspection part, so that the inspection part can be positioned for performing inspection.

In an optional manner, the inspection part is further provided with blind holes. The blind holes are provided on the inspection part, so that accuracy of the welding apparatus positioning the welding points on the to-be-welded object can be inspected and calibrated.

In an optional manner, the inspection part is rectangular; the positioning through holes include a first through hole, a second through hole, a third through hole, and a fourth through hole; and the blind holes include a first blind hole closest to the first through hole with a distance of $l_a$, a second blind hole closest to the second through hole with a distance of $l_b$, a third blind hole closest to the third through hole with a distance of $l_c$, and a fourth blind hole closest to the fourth through hole with a distance of $l_d$, where $l_a > l_b = l_c > l_d$. In view of product volatility and possible errors between the positioning holes and welding points on the to-be-welded object, the distance $l_a$ between the first through hole and the first blind hole is set to be greater than $l_b$, and the distance $l_d$ between the fourth through hole and the fourth blind hole is set to be less than $l_b$, so that during the inspection process, the inspection part is compatible with possible error fluctuations existing in an actual product, making the inspection results more accurate and effective.

According to another aspect of some embodiments of this application, a welding device is provided, including the welding apparatus according to any one of the foregoing manners.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

**BRIEF DESCRIPTION OF DRAWINGS**

Persons of ordinary skill in the art can clearly understand various other advantages and benefits by reading the detailed description of the preferred embodiments below. The accompanying drawings are merely intended to illustrate the preferred embodiments and are not intended to limit this application. Throughout the accompanying drawings, the same reference numerals represent the same parts. In the accompanying drawings:

FIG. 1 is a schematic structural side view of a welding apparatus according to an embodiment of this application;
FIG. 2 is a schematic diagram of an internal structure of a welding apparatus according to an embodiment of this application;
FIG. 3 is a schematic structural diagram of a distance measuring part in a welding apparatus according to an embodiment of this application;
FIG. 4 is a schematic structural diagram of a blowing part in a welding apparatus according to an embodiment of this application;
FIG. 5 is a schematic structural diagram of an inspection part in a welding apparatus according to an embodiment of this application;
FIG. 6 is a schematic structural diagram of inspection steps of an inspection part in a welding apparatus according to an embodiment of this application; and
FIG. 7 is a schematic structural vertical view of an inspection part in a welding apparatus according to an embodiment of this application.

Reference signs in specific embodiments are as follows:

welding apparatus 100, body portion 110, welding part 120, laser beam 121, distance measuring part 130, distance measuring path 131, distance meter 132, first distance meter 1321, second distance meter 1322, position adjustment component 133, first slide rail 1331, second slide rail 1332, positioning part 140, blowing part 150, air inlet 151, air blower 152, inspection part 160, step-like structure 161, positioning through hole 162, first through hole 1621, second through hole 1622, third through hole 1623, fourth through hole 1624, blind hole 163, first blind hole 1631, second blind hole 1632, third blind hole 1633, fourth blind hole 1634; and

battery housing 200, first pole 210, second pole 220, third pole 230, positive pole 240, and negative pole 250.

## DESCRIPTION OF EMBODIMENTS

The following describes in detail the embodiments of technical solutions in this application with reference to the accompanying drawings. The following embodiments are merely used to describe technical solutions in this application more explicitly, and therefore they are merely used as examples and do not constitute a limitation to the protection scope of this application.

It should be noted that, unless otherwise specified, the technical terms or scientific terms used in the embodiments of the present application shall have ordinary meanings understood by persons skilled in the art to which the embodiments of the present application belong.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application instead of indicating or implying that the apparatuses or components mentioned must have specific orientations or must be constructed or manipulated according to specific orientations, and therefore shall not be construed as any limitations on embodiments of this application.

In addition, the technical terms "first", "second", and so on are merely for the purpose of description, and shall not be understood as any indication or implication of relative importance or any implicit indication of the number of technical features indicated. In the descriptions of this application, "a plurality of" means at least two unless otherwise specifically stated.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in this application as appropriate to specific situations.

In the description of the embodiments of the present application, unless otherwise clearly specified and limited, a first feature being "on" or "under" a second feature may mean that the first and second features are in direct contact, or the first and second features are in indirect contact through an intermediary. Further, the first feature being "on", "above", or "on top of" the second feature may mean that the first feature is directly above or obliquely above the second feature, or simply mean that the first feature is horizontally higher than the second feature. The first feature being "under", "below", or "beneath" the second feature may mean that the first feature is directly beneath or obliquely beneath the second feature, or simply mean that the first feature is horizontally lower than the second feature.

Currently, from the perspective of market development, application of electric vehicle batteries is becoming more and more extensive. Electric vehicle batteries are widely used not only in energy storage power supply systems such as hydro, thermal, wind, and solar power plants, but also in electric transportation tools such as electric bicycles, electric motorcycles, electric vehicles, and fields such military equipment and aerospace. With continuous expansion of application fields of electric vehicle batteries, market demands for the electric vehicle batteries are also increasing.

In the process of battery production, to ensure the stability of the circuit connection structure on the battery, poles need to be welded on the battery housing, and the battery are connected to external apparatuses through the poles, so as to form a stable current loop.

Inventors of this application have noted that, pole welding takes time and effort, and in order to ensure the welding effect and pass rate of the product, the distance of the pole needs to be measured before the welding, so as to determine the defocus amount during pole welding. Distance measurement of the pole takes plenty of time, and welding after distance measurement also consumes time and cost, which greatly affect the battery production efficiency.

Based on the foregoing problem, this application provides a welding apparatus, where the welding apparatus includes a welding part and a distance measuring part that are both disposed on the body portion, so that when the welding part performs welding on the welding points on the to-be-welded object that have been measured, the distance measuring part directly performs distance measurement on the subsequent welding points. The welding part and the distance measuring part work at the same time and coordinate with each other to fully improve the welding efficiency, thereby increasing the battery productivity to meet market demand.

According to an aspect of embodiments of this application, a welding device is provided, including the foregoing welding apparatus.

Specifically, the welding device further includes a grasping apparatus, such as a manipulator, where the grasping apparatus is connected to the welding apparatus, and is configured to drive the welding apparatus to move, so that the welding apparatus can separately be aligned to multiple to-be-welded objects for welding.

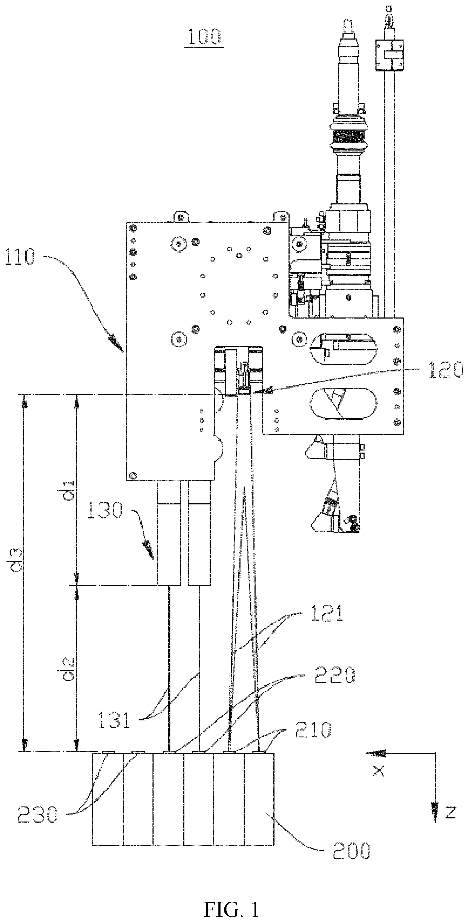

According to another aspect of embodiments of this application, a welding apparatus is provided. Specifically, FIG. 1 shows a structure of a welding apparatus 100 according to an embodiment of this application. The welding apparatus 100 includes: a body portion 110, a welding part 120, and a distance measuring part 130. The welding part 120 is disposed on the body portion 110, and is configured to perform welding on welding points on the to-be-welded object. The distance measuring part 130 is disposed on the body portion 110 and located on a side of the welding part 120, and is configured to measure a defocus amount from the welding points on the to-be-welded object to the welding part 120. The welding part 120 and the distance measuring part 130 are aligned to different welding points at the same time, so that the welding part 120 and the distance measuring part 130 simultaneously perform welding and distance measurement on different welding points, respectively.

The body portion 110 is a body structure of the welding apparatus 100, and is configured for mounting and fastening the welding part 120, distance measuring part 130 and other parts.

The welding part 120 may be a laser welding machine. Laser welding is an efficient and precise welding method that high-energy-density laser beam is used as a heat source. Laser welding is one of important aspects of application of laser material processing technology. Laser welding is a heat conduction process. To be specific, laser radiation heats the surface of the workpiece, and the surface heat diffuses to the inside through heat conduction. Through control of parameters such as the width, energy, peak power and repetition frequency of the laser pulse, the workpiece is melted to form a specific molten pool. Laser welding has been successfully applied in the precise welding of micro and small parts due to its unique advantages.

The welding part 120 may include a welder and a galvanometer. The welder generates laser beams for welding. The galvanometer is disposed in an optical path of the laser beam, and includes an optical scanner, an electronic driving amplifier, and an optical reflective mirror. A signal provided by the computer controller drives the optical scanner through a driving amplifier circuit, thereby controlling deflection of the laser beam.

The distance measuring part 130 is a tool for measuring length or distance, and may specifically be a laser distance meter, an ultra-sonic distance meter, or an infrared distance meter.

The defocus amount is a distance between a laser focus and an affected substance. In the welding process, the defocus amount has great influence on welding quality. The laser welding usually requires a specific defocus amount because power density in the center of a spot at the laser focus is so high that the spot tends to evaporate into a hole. On each plane away from the laser focus, the power density distribution is relatively uniform.

Specifically, still refer to FIG. 1, which further shows a laser beam 121 of the welding part 120 and a distance measuring path 131 of the distance measuring part 130. It should be noted that, the laser beam 121 and the distance measuring path 131 in the figure are only used for description, and the laser beam 121 and the distance measuring path 131 may be invisible in a specific actual product. As shown in the figure, the distance measuring part 130 is disposed on a side of the welding part 120 along an x-axis direction. Welding poles on the battery housing 200 is used as an example for welding a to-be-welded object, where the poles are the welding points on the to-be-welded object. While the welding part 120 is performing welding on a first pole 210 that has been measured, the distance measuring part 130 performs distance measurement on a second pole 220 that is on a side of the first pole 210 along the x-axis direction. After the first pole 210 has been welded and the second pole 220 has been measured, the welding apparatus 100 as a whole moves in the x-axis direction or the battery housing 200 as a whole moves in an opposite direction of the x-axis direction, the welding part 120 performs welding on the second pole 220, and the distance measuring part 130 performs distance measurement on a third pole 230.

Still refer to FIG. 1. Working principles of the distance measurement and welding are as follows: A distance between the distance measuring part 130 and the welding part 120 along an z-axis direction is d1, a distance between the welding point on the to-be-welded object and the distance measuring part 130 along the z-axis direction measured by the distance measuring part 130 is d2, and a defocus amount between the welding part 120 and the welding point is obtained: d3 = d1 + d2. Based on comparison between the actual defocus amount d3 and a required defocus amount, height of the welding part 120 is adjusted. Specifically, an adjusting mechanism for adjusting the height of the welding part 120, such as a guide rail or a cylinder, may be disposed on the body portion 110; or an external mechanism, such as a manipulator, may be used to adjust an overall height of the welding apparatus 100 so as to adjust the height of the welding part 120.

The welding part 120 and the distance measuring part 130 are both disposed on the body portion 110 of the welding apparatus 100, and the distance measuring part 130 is disposed on a side of the welding part 120. The welding part 120 and the distance measuring part 130 are aligned to different welding points at the same time, so that the welding part 120 and the distance measuring part 130 simultaneously perform welding and distance measurement on different welding points, respectively. Specifically, on the to-be-welded object, a welding point that has been measured by the distance measuring part 130 is welded by the welding part 120. While the welding part 120 is performing welding, the distance measuring part 130 measures distance to a next welding point on the to-be-welded object, so that times of the distance measurement and welding coincide, thereby effectively improving the efficiency of the welding step in battery production and increasing battery productivity to meet market demand.

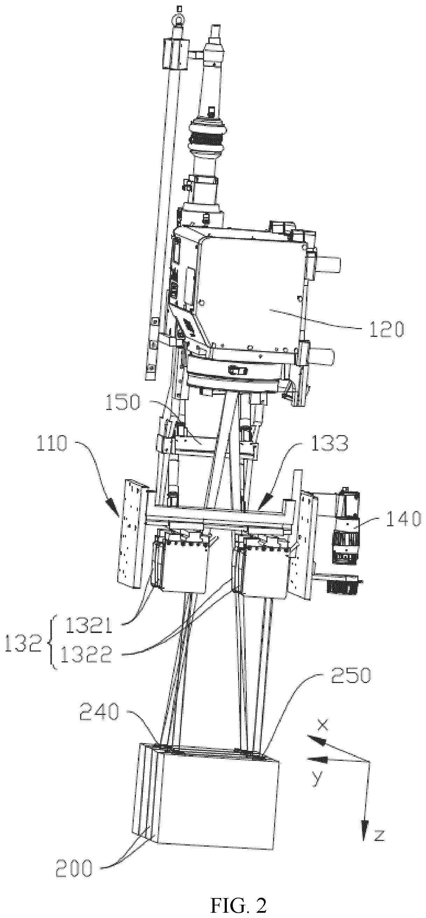

Still refer to FIG, 1 with further reference to FIG. 2. FIG. 2 shows an internal structure of an welding apparatus 100 according to an embodiment of this application. According to some embodiments of this application, the distance measuring part 130 includes multiple distance meters 132, and the multiple distance meters 132 are configured to simultaneously perform distance measurement on multiple welding points on the to-be-welded object, and the welding part 120 is configured to perform welding on the multiple welding points that have been measured by the multiple distance meters 132.

Specifically, as shown in FIG. 2, the battery housing 200 is still used as an example of the to-be-welded object. One battery housing 200 has two poles, including a positive pole 240 and a negative pole 250 that are disposed along a y-axis direction. In order to adapt to the characteristics of battery pole welding and implement rapid distance measurement and welding of battery poles, four distance meters 132 are disposed correspondingly, including two first distance meters 1321 and two second distance meters 1322. The first distance meter 1321 and the second distance meter 1322 are disposed along the y-axis direction. The first distance meter 1321 is configured to perform distance measurement on the positive pole 240, and the second distance meter 1322 is configured to perform distance measurement on the negative pole 250. The two first distance meters 1321 are disposed along the x-axis direction, and the two second distance meters 1322 are also disposed along the x-axis direction. The two first distance meters 1321 are configured to perform distance measurement on positive poles 240 on two adjacent battery housings 200, and the two second distance meters 1322 are configured to perform distance measurement on negative poles 250 on two adjacent battery housings 200. Therefore, the distance meters 132 can simultaneously perform distance measurement on the poles on two adjacent battery housings 200, further improving efficiency of the distance measurement.

In order to coordinate with the multiple distance meters 132, the welding part 120 may be provided with a laser galvanometer or a beam splitter, so as to control the deflection angle of laser beams and adjust the number of beams. In this way, the welding part 120 can perform welding on multiple poles that have been measured by the multiple distance meters 132.

It can be understood that, the foregoing embodiments are merely preferred embodiments designed based on the characteristics of battery pole welding, and in other embodiments, the number, position relationship, and the like of distance meters can be adaptively adjusted based on characteristics of corresponding to-be-welded objects. This is not limited herein.

The distance measuring part 130 includes multiple distance meters 132, and the multiple distance meters 132 are configured to simultaneously perform distance measurement on multiple welding points on the to-be-welded object, which increases the number of the welding points that can be simultaneously measured. The welding part 120 is configured to weld the multiple welding points that have been measured by the multiple distance meters 132, so that the multiple welding points that have been measured are welded, thereby further improving welding efficiency and increasing productivity.

Still refer to FIG. 2. According to some embodiments of this application, the distance measuring part 130 further includes a position adjustment component 133, and the multiple distance meters 132 are all disposed on the position adjustment component 133.

The position adjustment component 133 is a mechanism configured to adjust overall position of the distance meters 132 or adjust relative positions of the multiple distance meters 132. For example, the position adjustment component 133 may be a guide rail, a cylinder, or other driving adjustment mechanisms.

The distance measuring part 130 further includes the position adjustment component 133, and the multiple distance meters 132 are all disposed on the position adjustment component 133, so that the overall position of the distance meters 132 on the body portion 110 and the relative positions of the multiple distance meters 132 can be adjusted. Therefore, based on different to-be-welded objects and different distances between welding points, the positions of the distance meters 132 and the distance between the distance meters 132 can be adjusted accordingly, so as to adapt to different to-be-welded objects, thereby improving compatibility of the welding apparatus 100 to meet different application scenarios.

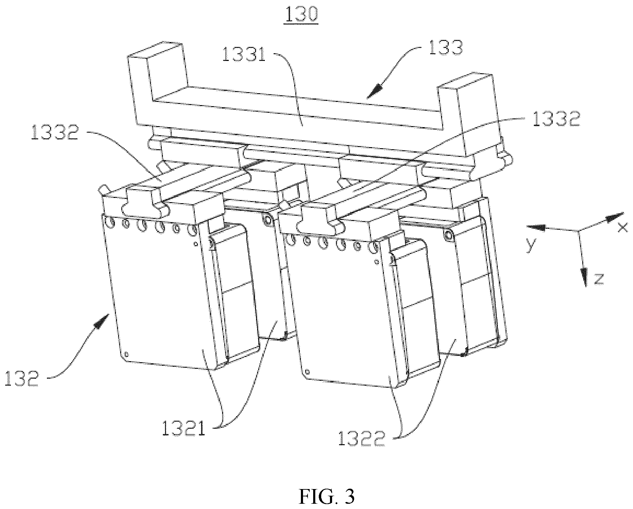

Refer to FIG. 3. FIG. 3 shows a structure of a distance measuring part 130 in the welding apparatus 100 according to an embodiment of this application. According to some embodiments of this application, the position adjustment component 133 includes a first slide rail 1331 and a second slide rail 1332, where the first slide rail 1331 is fastened on the body portion 110, the second slide rail 1332 is slidably disposed on the first slide rail 1331, and the distance meters 132 are slidably disposed on the second slide rail 1332.

Specifically, as shown in FIG. 3, the first slide rail 1331 can be fastened to the body portion 110 by its two ends, and the first slide rail 1331 can be arranged extending along the y-axis direction. There may be two second slide rails 1332, both slidably disposed on the first slide rail 1331. The second slide rail 1332 can be arranged extending along the x-axis direction. The two first distance meters 1321 are slidably disposed on one of the second slide rails 1332, and the two second distance meters 1322 are slidably disposed on the other second slide rail 1332. In this way, a distance between the two first distance meters 1321 along the x-axis direction can be adjusted, a distance between the two second distance meters 1322 along the x-axis direction can be adjusted, and a distance between the first distance meter 1321 and the second distance meter 1322 along the y-axis direction can be adjusted. Therefore, during welding of different to-be-welded objects, distances and positions between the distance meters 132 can be adjusted based on welding points on the different to-be-welded objects, thereby improving compatibility of the welding apparatus 100 to adapt to different products.

It can be understood that, those shown in the figure are merely examples. In other embodiments, the number of slide rails, a connection relationship between the distance meters and the slide rails, and the like can be correspondingly set based on actual requirements and characteristics of the to-be-welded object. This is not limited herein.

The position adjustment component 133 includes the first slide rail 1331 and the second slide rail 1332 that are disposed perpendicular to each other. The first slide rail 1331 is fastened on the body portion 110, so that the position adjustment component 133 and the distance meters 132 are fastened on the body portion 110. The second slide rail 1332 is slidably disposed on the first slide rail 1331, and the distance meters 132 are slidably disposed on the second slide rail 1332, so that relative positions of the distance meters 132 can be adjusted, which enables the distance meters 132 to perform corresponding position adjustment based on welding points on different to-be-welded objects, thereby improving the compatibility of the welding apparatus 100.

Refer to FIG. 2 again. According to some embodiments of this application, a positioning part 140 is disposed on the body portion 110.

Specifically, the positioning part 140 may be an image capturing apparatus, such as a CCD camera shown in FIG. 2. CCD, short for charge coupled device (charge coupled device), can convert light into electric charges and store and transfer electric charges, and can also take out stored electric charges to change voltage, so the CCD is an ideal CCD camera component. The CCD camera formed by the CCD is widely used because it is small in size, light in weight, immune to magnetic fields, and resistant to vibration and impact.

The positioning part 140 obtains positions of the welding points by capturing images of the to-be-welded object, so as to position the welding points on the to-be-welded object.

The positioning part 140 is disposed on the body portion 110 to position the welding points on the to-be-welded object, thereby improving welding accuracy and precision of the welding apparatus 100.

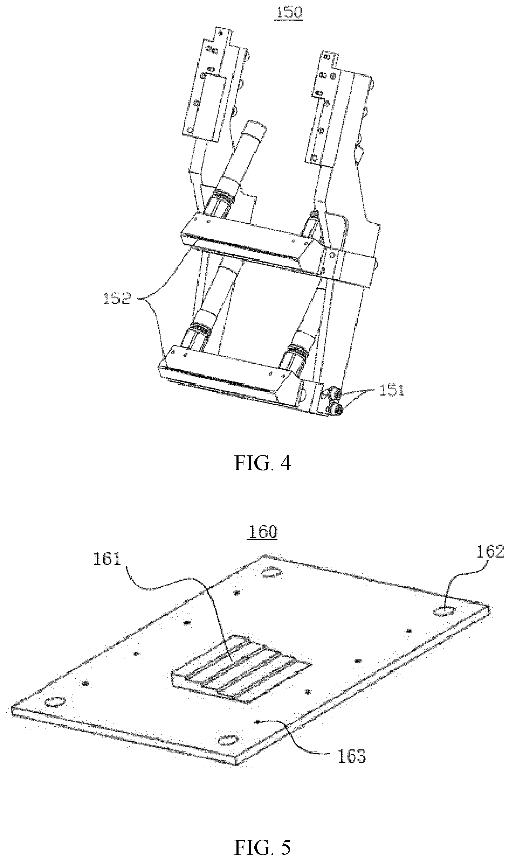

Still refer to FIG, 2 with further reference to FIG. 4. FIG. 4 shows a structure of a blowing part 150 in the welding apparatus 100 according to an embodiment of this application. According to some embodiments of this application, the blowing part 150 is disposed on the body portion 110.

The blowing part 150 is configured to connect to an external blowing pipe, and air in the blowing pipe is blown to the welding position through the blowing part 150 to blow away fumes produced during welding in a timely manner, so as to facilitate observation of welding conditions.

Specifically, as shown in FIG. 4, the blowing part 150 may be an air knife. The air knife is driven by a vortex blower or a combustion air blower (instead of energy-consuming compressed air). Different blowers are used with air knives to blow away dust and dry moisture on the surface of objects in a timely manner. When the compressed air enters the air knife, it is blown out at a high speed by an airflow sheet with a thickness of only 0.05 mm. According to the principle of Coanda effect and the special geometric shape of the air knife, this sheet air curtain can hold 30 to 40 times the ambient air at most to form a thin, high-strength, high-flow impingement air curtain. The air knife is divided into standard air knife and super air knife in terms of working mode. The air curtain of the standard air knife is deflected by 90 degrees and then blows out, and the air curtain of the super air knife blows out horizontally.

The blowing part 150 includes an air inlet 151 and an air blower 152, where the air inlet 151 is configured to connect to the blowing pipe and guide the air in the blowing pipe into the blowing part 150. The air entering the blowing part 150 is blown out from the air blower 152 after being compressed, so as to blow away fumes.

The blowing part 150 is disposed on the body portion 110 to blow away fumes produced during welding in a timely manner, so as to facilitate observation of welding conditions and help ensure the welding accuracy.

Refer to FIG. 5, which shows a structure of an inspection part 160 in the welding apparatus 100 according to an embodiment of this application. According to some embodiments of this application, the welding apparatus 100 further includes the inspection part 160, and the inspection part 160 is configured to inspect and calibrate the distance measuring part 130.

The inspection part 160 is a structure configured to inspect and calibrate the distance measuring part 130. Specifically, the inspection part 160 can be provided with a structure having a fixed height difference, and an accuracy of the distance measuring part 130 can be obtained by comparing a height difference measured by the distance measuring part 130 with the actual height difference.

The welding apparatus 100 further includes the inspection part 160, and the inspection part 160 inspects and calibrates the distance measuring part 130, so as to ensure distance measurement precision of the distance measuring part 130, thereby avoiding welding failure caused by errors in distance measurement, as well as the resulting welding perforation and other situations that will affect the product qualification rate.

Still refer to FIG. 5. According to some embodiments of this application, a step-like structure 161 is provided on the inspection part 160.

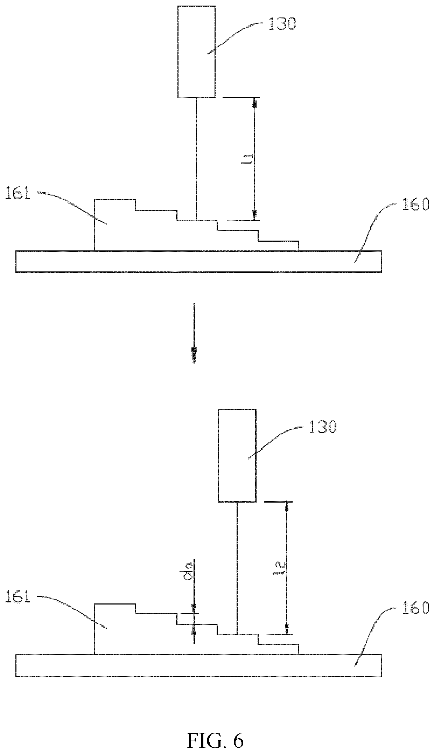

The step-like structure 161 is configured to inspect and calibrate the accuracy of the distance measuring part 130. For details, refer to FIG. 6. Steps of the inspection are as follows: The distance measuring part 130 is aligned with one step of the step-like structure 161, so as to measure a distance $l_1$ between the distance measuring part 130 and the step; then the distance measuring part 130 is moved and aligned with an adjacent step, so as to measure a distance $l_2$ between the distance measuring part 130 and the adjacent step; and a difference between $l_2$ and $l_1$ is compared with an actual height difference between the adjacent steps to obtain the accuracy and error value of the distance measuring part 130. In order to avoid the influence of other factors in a single inspection, the distance measuring part 130 can be moved to two sides separately, so as to separately perform the distance measurement on the adjacent steps on the two sides and ensure the inspection accuracy through multiple comparisons.

In order to make the height of the step-like structure 161 compatible with a maximum height difference generated by the welding points in the to-be-welded object, for welding of battery poles, the height difference $d_a$ between adjacent steps in the step-like structure 161 can be set to 0.5-4 mm, so as to adapt to a range of height difference of the battery poles. $d_a$ is preferably 2 mm. Because devices need alarming and foolproof design once the value exceeds 2 mm, it is more appropriate to set $d_a$ to 2 mm.

In addition, there may be five steps in the step-like structure 161. The step-like structure 161 with five steps is small in size and allows inspection and calibration of the distance measurement precision, repetition precision, linearity, and directivity of the distance measuring part 130 in positive and negative directions.

It should be noted that, a width of the step-like structure 161 needs to be larger than a light spot formed by the distance measuring part 130 so that the entire light spot of the distance measuring part 130 can fall within a surface of the step-like structure 161. If the length of the light spot generated by the distance measuring part 130 is greater than the width of the step structure 161, the heights of the light spot formed on the surface of the inspection part 160 vary, which affects the accuracy of distance measurement.

The step-like structure 161 is provided on the inspection part 160, so that distance measurement precision, repetition precision, linearity, and directivity of the distance measuring part 130 in positive and negative directions can be inspected and calibrated.

Refer to FIG. 5 again. According to some embodiments of this application, positioning through holes 162 are provided in corners of the inspection part 160.

It should be noted that, during welding on the battery housing, an end plate is provided on top of the battery housing, and the end plate is positioned and fastened through a positioning hole in its corner. The positioning through holes 162 in the corners of the inspection part 160 are configured to align with the positioning holes, so that the inspection part 160 is positioned for performing inspection.

The positioning through holes 162 are provided in the corners of the inspection part 160, so that the inspection part 160 is positioned for performing inspection.

Still refer to FIG. 5. According to some embodiments of this application, the inspection part 160 is further provided with blind holes 163.

The blind hole 163 is a hole provided on a surface of the inspection part 160 and does not penetrate the inspection part 160.

During inspection, the blind hole 163 serves as a position of the welding point, and the positioning part 140 images the inspection part 160. The accuracy and error value of the positioning part 140 can be inspected by comparing the coordinate value of the blind hole 163 in the image with the actual coordinate value of the blind hole 163 on the inspection part 160, and the positioning part 140 is calibrated based on the inspection result.

The blind holes 163 are provided on the inspection part 160, so that accuracy of the welding apparatus 100 positioning the welding points on the to-be-welded object can be inspected and calibrated.

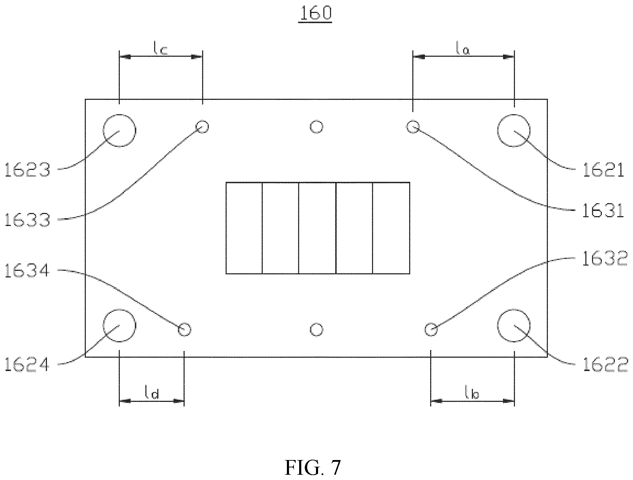

Refer to FIG. 7, which shows a vertical structure of an inspection part 160 in the welding apparatus 100 according to an embodiment of this application. According to some embodiments of this application, the inspection part 160 is rectangular, the positioning through holes 162 include a first through hole 1621, a second through hole 1622, a third through hole 1623, and a fourth through hole 1624. The blind holes 163 include a first blind hole 1631 closest to the first through hole 1621 with a distance of $l_a$, a second blind hole 1632 closest to the second through hole 1622 with a distance of $l_b$, a third blind hole 1633 closest to the third through hole 1623 with a distance of $l_c$, and a fourth blind hole 1634 closest to the fourth through hole 1624 with a distance of $l_d$, where $l_a > l_b = l_c > l_d$.

When the to-be-welded object is the battery housing, the distance $l_b$ between the second through hole 1622 and the second blind hole 1632 and the distance $l_c$ between the third through hole 1623 and the third blind hole 1633 are set to theoretical distances between positioning holes and poles on a battery end plate of an actual product. Considering the product volatility and possible errors between the positioning holes and poles in the battery end plate, the distance $l_a$ between the first through hole 1621 and the first blind hole 1631 is set larger than $l_b$, the distance $l_d$ between the fourth through hole 1624 and the fourth blind hole 1634 is set less than $l_b$, so that the inspection part 160 is compatible with possible error fluctuations in the actual product during the inspection, thereby making the inspection result more accurate and effective.

According to an error range in the actual production, preferably, $0 < l_a - l_b < 2$ mm and $0 < l_b - l_d < 2$ mm, so that the inspection part 160 adapts to the error range of the product.

Likewise, when multiple blind holes 163 are provided on the inspection part 160, distances between the blind holes 163 can be set accordingly based on theoretical distances and error range of the welding points on the to-be-welded object.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manners. This application is not limited to the specific embodiments disclosed in this specification, but includes all technical solutions falling within the scope of the claims.

**Claims**

1. A welding apparatus, **characterized by** comprising:

   a body portion;
   a welding part, disposed on the body portion and configured to weld welding points on a to-be-welded object; and
   a distance measuring part, disposed on the body portion and located on a side of the welding part, and configured to measure a defocus amount from the welding points on the to-be-welded object to the welding part, wherein
   the welding part and the distance measuring part are aligned to different welding points at the same time, so that the welding part and the distance measuring part simultaneously perform welding and distance measurement on different welding points, respectively.

2. The welding apparatus according to claim 1, **characterized in that** the distance measuring part comprises multiple distance meters, wherein the multiple distance meters are configured to simultaneously perform distance measurement on multiple welding points on the to-be-welded object; and
   the welding part is configured to perform welding on the multiple welding points that have been measured by the multiple distance meters.

3. The welding apparatus according to claim 2, **characterized in that** the distance measuring part further comprises a position adjustment component, and the multiple distance meters are all disposed on the position adjustment component.

4. The welding apparatus according to claim 3, **characterized in that** the position adjustment component comprises a first slide rail and a second slide rail that are disposed perpendicular to each other, wherein the first slide rail is fastened on the body portion, the second slide rail is slidably disposed on the first slide rail, and the distance meters are slidably disposed on the second slide rail.

5. The welding apparatus according to claim 1, **characterized in that** a positioning part is disposed on the body portion.

6. The welding apparatus according to claim 1, **characterized in that** a blowing part is disposed on the body portion.

7. The welding apparatus according to claim 1, **characterized in that** the welding apparatus further comprises an inspection part, wherein the inspection part is configured to inspect and calibrate the distance measuring part.

8. The welding apparatus according to claim 7, **characterized in that** a step-like structure is disposed on the inspection part.

9. The welding apparatus according to claim 8, **characterized in that** positioning through holes are provided in corners of the inspection part.

10. The welding apparatus according to claim 9, **characterized in that** the inspection part is further provided with blind holes.

11. The welding apparatus according to claim 10, **characterized in that** the inspection part is rectangular;

    the positioning through holes comprise a first through hole, a second through hole, a third through hole, and a fourth through hole; and
    the blind holes comprise a first blind hole closest to the first through hole with a distance of $l_a$, a second blind hole closest to the second through hole with a distance of $l_b$, a third blind hole closest to the third through hole with a distance of $l_c$, and a fourth blind hole closest to the fourth through hole with a distance of $l_d$, wherein

$$l_a > l_b = l_c > l_d.$$

12. A welding device, **characterized by** comprising the welding apparatus according to any one of claims 1 to 11.

FIG. 1

FIG. 2

FIG. 3

150

152

151

FIG. 4

160

161

162

163

FIG. 5

FIG. 6

FIG. 7

## INTERNATIONAL SEARCH REPORT

| International application No. |
| --- |
| **PCT/CN2022/096150** |

**A. CLASSIFICATION OF SUBJECT MATTER**

B23K 26/21(2014.01)i; B23K 26/70(2014.01)i; B23K 26/064(2014.01)i

According to International Patent Classification (IPC) or to both national classification and IPC

**B. FIELDS SEARCHED**

Minimum documentation searched (classification system followed by classification symbols)

B23K

Documentation searched other than minimum documentation to the extent that such documents are included in the fields searched

Electronic data base consulted during the international search (name of data base and, where practicable, search terms used)

CNTXT, CNKI, VEN: 焊接, 点, 测距, 离焦量, 距离, 不同, 多个, 调节, 滑轨, 定位, 吹风, 校正, 校验, welding, spot, ranging, diastimeter, defocusing, amount, distance, different, multi, adjust, slide, rail, position, blow, correct, verify.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 215658430 U (NINGDE CONTEMPORARY AMPEREX TECHNOLOGY CO., LTD.) 28 January 2022 (2022-01-28) see claims 1-12 | 1-12 |
| X | CN 113042881 A (KEYENCE CORP.) 29 June 2021 (2021-06-29) see description, paragraphs 57-342, and figures 1-19 | 1-12 |
| X | CN 207710085 U (DONGGUAN STRONG LASER EQUIPMENT CO., LTD.) 10 August 2018 (2018-08-10) see description, paragraphs 53-69, and figures 1-4 | 1-6, 12 |
| Y | | 7-11 |
| X | CN 206216124 U (HUIZHOU DESAY AUTOMATION TECHNOLOGY CO., LTD.) 06 June 2017 (2017-06-06) see description, paragraphs 29-44, and figures 1-7 | 1-6, 12 |
| Y | | 7-11 |
| Y | CN 109570748 A (HEFEI INSTITUTES OF PHYSICAL SCIENCE, CHINESE ACADEMY OF SCIENCES) 05 April 2019 (2019-04-05) see description, paragraphs 31-45, and figures 1-10 | 7-11 |

✓ Further documents are listed in the continuation of Box C.　　　✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 August 2022** | **07 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/096150**

### C.    DOCUMENTS CONSIDERED TO BE RELEVANT

| Category* | Citation of document, with indication, where appropriate, of the relevant passages | Relevant to claim No. |
|---|---|---|
| X | CN 110548990 A (SHENZHEN DADE LASER TECHNOLOGY CO., LTD.) 10 December 2019 (2019-12-10) see description, paragraphs 73-142, and figures 1-2 | 1, 5, 6, 12 |
| A | CN 108539243 A (UNITED WINNERS LASER CO., LTD.) 14 September 2018 (2018-09-14) see entire document | 1-12 |
| A | CN 108115271 A (HAN'S LASER TECHNOLOGY INDUSTRY GROUP CO., LTD.) 05 June 2018 (2018-06-05) see entire document | 1-12 |
| A | CN 103093767 A (OMRON CORP.) 08 May 2013 (2013-05-08) see entire document | 1-12 |
| A | CN 107150172 A (UNITED WINNERS LASER CO., LTD.) 12 September 2017 (2017-09-12) see entire document | 1-12 |
| A | US 2018147659 A1 (GLOWFORGE INC.) 31 May 2018 (2018-05-31) see entire document | 1-12 |

Form PCT/ISA/210 (second sheet) (January 2015)

## INTERNATIONAL SEARCH REPORT
### Information on patent family members

International application No.

**PCT/CN2022/096150**

| Patent document cited in search report | | | Publication date (day/month/year) | Patent family member(s) | | | Publication date (day/month/year) |
|---|---|---|---|---|---|---|---|
| CN | 215658430 | U | 28 January 2022 | None | | | |
| CN | 113042881 | A | 29 June 2021 | US | 2021197313 | A1 | 01 July 2021 |
| | | | | JP | 2021104523 | A | 26 July 2021 |
| | | | | DE | 102020133533 | A1 | 01 July 2021 |
| CN | 207710085 | U | 10 August 2018 | None | | | |
| CN | 206216124 | U | 06 June 2017 | None | | | |
| CN | 109570748 | A | 05 April 2019 | None | | | |
| CN | 110548990 | A | 10 December 2019 | None | | | |
| CN | 108539243 | A | 14 September 2018 | None | | | |
| CN | 108115271 | A | 05 June 2018 | None | | | |
| CN | 103093767 | A | 08 May 2013 | TW | 201321107 | A | 01 June 2013 |
| | | | | JP | 2013094816 | A | 20 May 2013 |
| CN | 107150172 | A | 12 September 2017 | None | | | |
| US | 2018147659 | A1 | 31 May 2018 | WO | 2018098398 | A1 | 31 May 2018 |

Form PCT/ISA/210 (patent family annex) (January 2015)

**REFERENCES CITED IN THE DESCRIPTION**

**Patent documents cited in the description**

- CN 202122326749